# EUROPEAN PATENT APPLICATION

(11) **EP 4 576 373 A1**
(43) Date of publication of application: **25.06.2025**
(21) Application number: 24839975.0
(22) Date of filing: 03.07.2024
(51) Int. Cl.: H01M 50/30, H01M 50/325, H01M 50/333, H01M 50/342, H01M 50/211, H01M 50/249, B60L 50/64

(54) **BATTERY PACK**

(30) Priority: 07.07.2023 KR 20230088276
(71) Applicant: LG Energy Solution, Ltd., Seoul 07335 (KR)
(72) Inventor: CHOI, Jong Hwa, Daejeon 34122 (KR); LEE, Hyoung Suk, Daejeon 34122 (KR); SHIN, Ju Hwan, Daejeon 34122 (KR); KIM, Ki Young, Daejeon 34122 (KR)
(74) Representative: Plasseraud IP
(86) International application number: PCT/KR2024/009333
(87) International publication number: WO 2025/014162

(57) **Abstract**

Example embodiments of the present technology provide a battery pack. The battery pack includes a housing with a base plate and side walls coupled to the base plate, a plurality of battery cell assemblies on an upper surface of the base plate, and a plurality of exhaust devices coupled to the base plate.

## Description

### [Technical Field]

The present invention relates to a battery pack. The present application claims the benefit of priority based on Korean Patent Application No. 10-2023-0088276, filed on July 7, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

The safety of a secondary battery is directly related to the life of an occupant in a vehicle, and thus, a key task in the development of technology of a secondary battery for use in a vehicle is to improve the safety of the secondary battery. To improve the safety of the secondary battery, the design of an efficient discharge path of a high-temperature gas in the secondary battery is essential.

### [Disclosure]

### [Technical Problem]

The present invention is directed to providing a battery pack with improved safety.

### [Technical Solution]

Example embodiments of the present invention provide a battery pack. The battery pack includes a housing with a base plate and side walls coupled to the base plate, a plurality of battery cell assemblies on an upper surface of the base plate, and a plurality of exhaust devices coupled to the base plate.

Each of the plurality of exhaust devices may be of a valve type.

Each of the plurality of exhaust devices may be a rupture disk.

The base plate may include a plurality of base holes connected to the plurality of exhaust devices.

Each of the plurality of exhaust devices may include an exhaust hole connected to a corresponding one of the plurality of base holes.
each of the plurality of exhaust devices includes an exhaust hole connected to a corresponding one of the plurality of base holes.

A width of each of the plurality of base holes may be in a range of 30 mm to 100 mm.

A width of the exhaust hole of each of the plurality of exhaust devices may be less than a width of each of the plurality of base holes.

A shape of the exhaust hole of each of the plurality of exhaust devices may be different from a shape of each of the plurality of base holes.

Each of the plurality of base holes may have a quadrangular shape, and a cross section of the exhaust hole of each of the plurality of exhaust devices may have a circular shape.

Each of the base holes may be connected to two or more of the plurality of exhaust devices.

The plurality of exhaust devices may be arranged asymmetrically.

The battery pack may further include a plurality of exhaust device brackets configured to fix the plurality of exhaust devices to the base plate.

The exhaust device brackets may be in contact with the upper surface of the base plate.

The base plate may include an electronic component mounting region on which a plurality of electronic components are disposed and a battery mounting region overlapping the plurality of battery cell assemblies.

The plurality of exhaust devices may be on the electronic component mounting region.

Each of the plurality of exhaust devices may be spaced apart from the plurality of battery cell assemblies.

### [Advantageous Effects]

A battery cell assembly according to example embodiments of the present invention includes an exhaust device coupled to a base plate of a housing. Accordingly, when the thermal runaway event occurs, a high-temperature gas can be effectively discharged and the safety of a battery pack can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view for describing a battery pack according to example embodiments.
FIG. 2 is a cross-sectional view taken along line A-A' of FIG. 1.
FIG. 3 is an enlarged partial cross-sectional view of a part of FIG. 2.
FIG. 4 illustrates a vehicle including the battery pack of FIG. 1.
FIG. 5 is a plan view of an exhaust device according to other example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

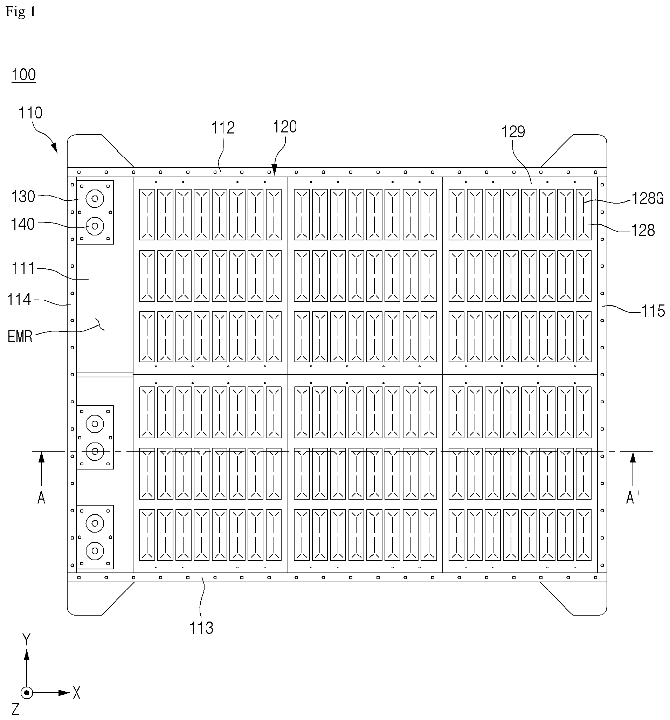

FIG. 1 is a plan view for describing a battery pack according to example embodiments.

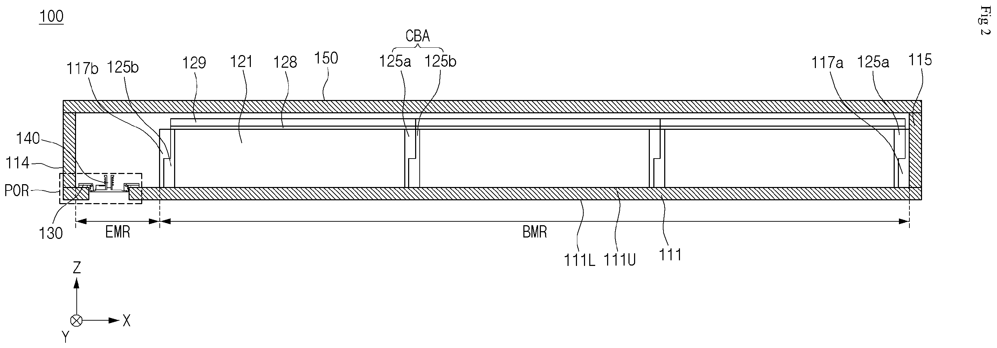

FIG. 2 is a cross-sectional view taken along line A-A' of FIG. 1.

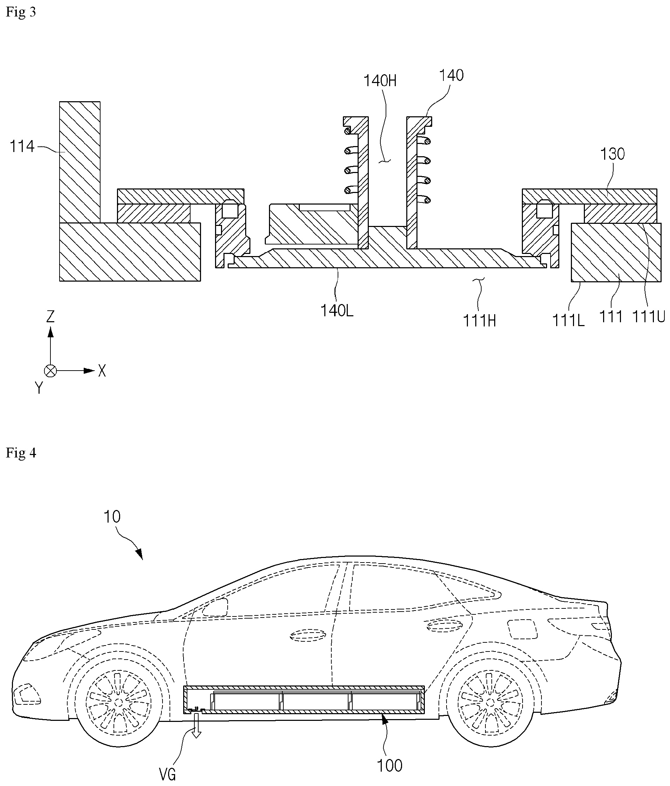

FIG. 3 is an enlarged partial cross-sectional view of a part POR of FIG. 2.

Referring to FIGS. 1 to 3, a battery pack 100 may include a housing 110, a plurality of battery cell assemblies 120, a plurality of exhaust device brackets 130, a plurality of exhaust devices 140, and a lead plate 150. The battery pack 100 is a final form of a battery system mounted on a mobility or the like.

The housing 110 may provide a space for arranging the plurality of battery cell assemblies 120 therein. The housing 110 may include a base plate 111 and side walls 112, 113, 114, and 115.

Two directions substantially parallel to an upper surface 111U of the base plate 111 are defined as an X-axis direction and a Y-axis direction, and a direction substantially perpendicular to the upper surface 111U of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

The base plate 111 may include a plurality of plates coupled to each other by friction stir welding. The base plate 111 may include a plurality of cooling channels that are flow paths of a cooling fluid. The base plate 111 may include a plurality of cavities, thus resulting in a reduction of the weight of the base plate 111. Each of the plurality of cooling channels and the plurality of cavities may extend in the X-axis direction.

The base plate 111 may include a battery mounting region BMR and an electronic component mounting region EMR. The battery mounting region BMR and the electronic component mounting region EMR may be regions distinguished from each other. The base plate 111 may be divided by the battery mounting region BMR and the electronic component mounting region EMR. The battery mounting region BMR may be a space for the battery cell assemblies 120, and the electronic component mounting region EMR may be a space for electronic components to be described below. The battery mounting region BMR may overlap the plurality of battery cell assemblies 120 in the Z-axis direction. The electronic components may be on the electronic component mounting region ERM. For example, a supporter 117b or a cross beam 125b coupled to the supporter 117b may be a boundary between the battery mounting region BMR and the electronic component mounting region EMR.

The base plate 111 may include a plurality of base holes 111H. The plurality of base holes 111H may be in the electronic component mounting region EMR. The plurality of base holes 111H may be only in the electronic component mounting region EMR. Each of the plurality of base holes 111H may be spaced apart from the battery mounting region BMR. A part of the base plate 111 of the battery mounting region BMR may not include the base holes 111H. Each of the plurality of base holes 111H may be spaced apart from the plurality of battery cell assemblies 120. Each of the plurality of base holes 111H may not overlap the plurality of battery cell assemblies 120 in the Z-axis direction.

As a non-limiting example, each of the plurality of base holes 111H may have a quadrangular shape. A length of each of the plurality of base holes 111H in the Y-axis direction may be different from a length of each of the plurality of base holes 111H in the X-axis direction. The length of each of the plurality of base holes 111H in the Y-axis direction may be greater than the length of each of the plurality of base holes 111H in the X-axis direction. However, the present invention is not limited thereto, and each of the plurality of base holes 111H may include various shapes such as a square shape, a circular shape, a triangular shape, a polygonal shape, a star shape, and a cross shape.

The plurality of base holes 111H may be arranged asymmetrically. The plurality of base holes 111H may be asymmetrically arranged with respect to a center line of the base plate 111 parallel to the X-axis direction. The number of exhaust holes 111H between the center line of the base plate 111 parallel to the X-axis direction and the side wall 112 may be different from the number of exhaust holes 111H between the center line of the base plate 111 parallel to the X-axis direction and the side wall 113. The number of exhaust holes 111H between the center line of the base plate 111 parallel to X-axis direction and the side wall 112 may be less than the number of exhaust holes 111H between the center line of the base plate 111 parallel to in the X-axis direction and the side wall 113.

The side walls 112, 113, 114, and 115 may be coupled to the base plate 111. The side walls 112, 113, 114, and 115 may be welded to the base plate 111. The side walls 112, 113, 114, and 115 may extend in the Z-axis direction. The side walls 112, 113, 114, and 115 may include empty inner spaces and thus the weight thereof may decrease. The side walls 112 and 113 may be substantially perpendicular to the X-axis direction, and the side walls 114 and 115 may be substantially perpendicular to the Y-axis direction.

The plurality of battery cell assemblies 120 may be on the base plate 111 of the housing 110. The base plate 111 may support the plurality of battery cell assemblies 120. The side walls 112, 113, 114, and 115 may horizontally surround the plurality of battery cell assemblies 120.

Each of the plurality of battery cell assemblies 120 may include a cell stack 121, cross beams 125a and 125b, a fire-resistant sheet 128, and an upper cover 129.

According to example embodiments, the cell stack 121 may include a plurality of battery cells and a plurality of separators. Each of the plurality of battery cells may include an electrode assembly, an electrolyte, and a case. Each of the plurality of battery cells may be a pouch-type battery cell.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator interposed therebetween are wound together. The stack type electrode assembly may include a plurality of positive electrodes and a plurality of negative electrodes that are sequentially stacked, and a plurality of separators therebetween. The case may cover the electrode assembly. The electrode assembly may be embedded in the case. The case may be, for example, a pouch case. The case may include, for example, an aluminum laminate sheet. The electrolyte may be injected into the case.

The plurality of battery cells may form a plurality of banks. The plurality of banks may include a set of battery cells connected in parallel to each other. The plurality of banks may be connected in series to each other. A current to be output by the cell stack 121 may be determined by the number of battery cells of each of the plurality of banks, and a voltage to be output by the cell stack 121 may be determined by the number of the plurality of banks.

According to example embodiments, each of the plurality of battery cell assemblies 120 may further include a plurality of separators between the plurality of pouch type battery cells. The plurality of separators horizontally support the plurality of pouch type battery cells to prevent swelling of the plurality of pouch type battery cells.

According to example embodiments, the plurality of separators may be thermal barriers. According to example embodiments, each of the plurality of separators may have a high melting temperature and a low thermal conductivity. According to example embodiments, each of the plurality of separators may include a flame retarding material such as a ceramic and a coated glass fiber. According to example embodiments, each of the plurality of separators may be configured to emit a fire retarding material and a fire extinguishing agent when a thermal runaway event occurs.

The cross beam 125a and the cross beam 125b of each of the plurality of battery cell assemblies 120 may be spaced apart from each other with the cell stack 121 interposed therebetween. The cross beam 125a and the cross beam 125b may cover the cell stack 121 horizontally. The cross beam 125a and the cross beam 125b may be fixed to the cell stack 121 via an adhesive material or the like.

According to example embodiments, the cross beam 125a and the cross beam 125b may be different from each other and have complementary shapes. For example, the cross beam 125b of each of the battery cell assemblies 120 may be coupled to the cross beam 125a of a subsequent battery cell assembly 120 among the battery cell assemblies 120. The cross beam 125a and the cross beam 125b that are coupled to each other may form a cross beam assembly CBA together. The cross beam 125a and the cross beam 125b of each cross-beam assembly CBA may be engaged with each other. The cross beam 125a adjacent to the side wall 115 may be coupled to the supporter 117a on the base plate 111. The supporter 117b may be coupled to the cross beam 125b adjacent to the side wall 114.

The fire-resistant sheet 128 may be on the cell stack 121. The upper cover 129 may be on the fire-resistant sheet 128. The fire-resistant sheet 128 may be interposed between the cell stack 121 and the upper cover 129. The upper cover 129 may have higher rigidity than the fire-resistant sheet 128 and be configured to protect the cell stack 121.

The fire-resistant sheet 128 may include, for example, a refractory material such as mica. The fire-resistant sheet 128 may include a plurality of cutting guides 128G. Each of the plurality of cutting guides 128G may overlap a corresponding one of exhaust holes 129H of the upper cover 129 in the Z-axis direction. The plurality of cutting guides 128G may be formed by, for example, non-cutting processing the fire-resistant sheet 128 using a knife or the like. When a thermal runaway event occurs in the cell stack 121, a part of the fire-resistant sheet 128 on which the plurality of cutting guides 128G are formed may be easily broken, and thus, a high-temperature gas generated from the cell stack 121 may be discharged through the exhaust holes 129H.

According to example embodiments, the battery pack 100 may further include a center beam. The center beam may be substantially parallel to the X-axis direction. The center beam may isolate battery cell assemblies 120 adjacent to the side wall 112 from battery cell assemblies 120 adjacent to the side wall 113.

The plurality of exhaust devices 140 may be coupled to the base plate 111. The plurality of exhaust devices 140 may be coupled to the base plate 111 by the plurality of exhaust device brackets 130. The plurality of exhaust device brackets 130 may be coupled to the base plate 111, and the plurality of exhaust devices 140 may be coupled to the plurality of exhaust device brackets 130. The plurality of exhaust device brackets 130 may be fixed to the base plate 111, and the plurality of exhaust devices 140 may be fixed to the plurality of exhaust device brackets 130.

Each of the plurality of exhaust device brackets 130 may be coupled to the upper surface 111U of the base plate 111. Each of the plurality of exhaust device brackets 130 may be in contact with the upper surface 111U of the base plate 111. Accordingly, the plurality of exhaust device brackets 130 and the plurality of exhaust devices 140 may be at a higher level than the lower surface 111L of the base plate 111. The plurality of exhaust devices 140 and the plurality of exhaust device brackets 130 may not protrude from the lower surface 111L of the base plate 111 to the outside of the battery pack 100. The lower surface 140L of the plurality of exhaust devices 140 may be between the lower surface 111L and the upper surface 111U of the base plate 111. However, the present invention is not limited thereto, and the lower surface 140L of the plurality of exhaust devices 140 may be between the upper surface 111U of the base plate 111 and the lead plate 150.

The plurality of exhaust devices 140 may be of a valve type (or a spring type). Each of the plurality of exhaust devices 140 may include an exhaust hole 140H. The exhaust holes 140H may be closed in a normal state. When a thermal runaway event occurs in one of the plurality of battery cell assemblies 120, internal pressure of the battery pack 100 may increase and the exhaust holes 140H of the plurality of exhaust devices 140 may be opened. Accordingly, a high-temperature gas may be discharged from the inside of the battery pack 100 to the outside of the battery pack 100 through the exhaust devices 140.

According to example embodiments, the exhaust hole 140H of each of the plurality of exhaust devices 140 may have a shape different from that of each of the plurality of base holes 111H. As a non-limiting example, the exhaust hole 140H of each of the plurality of exhaust devices 140 may have a circular shape, and each of the plurality of base holes 111H may have a quadrangular shape. The exhaust hole 140H of each of the plurality of exhaust devices 140 may have various shapes such as a square shape, a circular shape, a triangular shape, a polygonal shape, a star shape, and a cross shape.

According to example embodiments, a width (or diameter) of the exhaust hole 140H of each of the plurality of exhaust devices 140 may be different from a width (or diameter) of each of the plurality of base holes 111H. According to example embodiments, the width (or diameter) of the exhaust hole 140H of each of the plurality of exhaust devices 140 may be less than the width (or diameter) of each of the plurality of base holes 111H. According to example embodiments, the width (or diameter) of each of the plurality of base holes **111H** may be in a range of about 30 mm to about 100m.

According to example embodiments, the plurality of exhaust devices 140 may be connected to the plurality of base holes 111H. The connection of the plurality of exhaust devices 140 to the plurality of base holes 111H may be understood to mean that the open exhaust hole 140H of each of the plurality of exhaust devices 140 is connected to a corresponding one of the plurality of base holes 111H when a thermal runaway event occurs.

Each of the base holes 111H may overlap a plurality of exhaust devices 140 (i.e., two or more exhaust devices 140) in the Z-axis direction. Each of the base holes 111H may be connected to a plurality of exhaust devices 140 (i.e., two or more exhaust devices 140). That is, according to example embodiments, a plurality of exhaust devices 140 (i.e., two or more exhaust devices 140) may be connected to one of the base holes 111H.

When a thermal runaway event occurs in the battery pack 100, the exhaust hole 140H of each of the plurality of exhaust devices 140 and the plurality of base holes 111H may provide a path for discharging a high-temperature gas from the inside of the battery pack 100 to the outside. Accordingly, thermal propagation may be delayed, and the stability of the battery pack 100 may be improved.

Here, the thermal runaway occurring in the battery pack 100 is a state in which a change of temperature of the plurality of battery cell assemblies 120 accelerates the change of temperature, i.e., an uncontrollable positive feedback. The temperature of the plurality of battery cell assemblies 120 that are in a thermal runaway state sharply increase, and a large amount of high-pressure gas and combustion debris are discharged.

The plurality of exhaust devices 140 may isolate the inside of the battery pack 100 from the outside when the battery pack 100 is in a normal state. When a thermal runaway event occurs in the battery pack 100, the plurality of exhaust devices 140 may open the plurality of exhaust holes 140H to provide a path for discharging a high-temperature gas to the outside.

The plurality of exhaust devices 140 may be on the electronic component mounting region EMR. The plurality of exhaust devices 140 may be spaced apart from the battery mounting region BMR. The plurality of exhaust devices 140 may be spaced apart from the plurality of battery cell assemblies 120. The plurality of exhaust devices 140 may not be on the battery mounting region BMR. The plurality of exhaust devices 140 may be only on the electronic component mounting region EMR.

In the example of FIG. 1, the plurality of battery cell assemblies 120 are arranged in two rows and three columns. Accordingly, it may be understood that the plurality of battery cell assemblies 120 are arranged in a 3x2 array. A battery pack including the plurality of battery cell assemblies 120 arranged in an MxN array would be easily derived by those of ordinary skill in the art, based on the above description. Here, M and N are each an integer of 1 or more.

The lead plate 150 may be coupled to the side walls 112, 113, 114 and 115. The lead plate 150 may cover elements, such as the battery cell assemblies 120 and electronic components, inside the battery pack 100. The lead plate 150 may be fixed to the side walls 112, 113, 114, and 115 by mechanical means such as a bolt.

The battery pack 100 may further include interconnectors connecting adjacent battery cell assemblies 120 to each other. Accordingly, the plurality of battery cell assemblies 120 may be connected in series, and the battery pack 100 may output a high voltage.

The battery pack 100 may further include electronic components. The electronic components may include an electronic device required to drive the battery pack 100. The electronic components may be on an electronic component mounting region EMR.

The electronic components may include, for example, a battery management system (BMS). The BMS may be configured to monitor, balance, and control the battery pack 100. The monitoring of the battery pack 100 may include measuring voltages and currents of certain nodes inside the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load (e.g., a motor of a vehicle), when abnormal voltage such as voltage surges occurs.

### (Second Embodiment)

FIG. 4 illustrates a vehicle10 including the battery pack 100 of FIG. 1.

Referring to FIGS. 2 and 4, the vehicle 10 may include the battery pack 100. The vehicle 10 may include a body configured to accommodate the battery pack 100. The vehicle 10 may be a battery electric vehicle (BEV) or a hybrid electric vehicle (HEV). The vehicle 10 may be driven by electric energy stored in the battery pack 100. The vehicle 10 is not limited to a passenger car, and may be, for example, a truck, an electric scooter, an electric wheelchair, or an electric bike. According to example embodiments, the vehicle 10 may further include an on-board charger (OBC), an electric power control unit (EPCU), a driving motor, and a reducer.

According to example embodiments, the exhaust devices 140 of the battery pack 100 are coupled to the base plate 111 and thus a gas discharged from the battery pack 100 in a thermal runaway event faces downward (e.g., the ground). Accordingly, it is possible to prevent the body of the vehicle 10 from being damaged by reaction with a high-temperature gas and to alleviate or prevent exposure of passengers to the high-temperature gas, thereby improving the safety of the vehicle 10.

### (Third Embodiment)

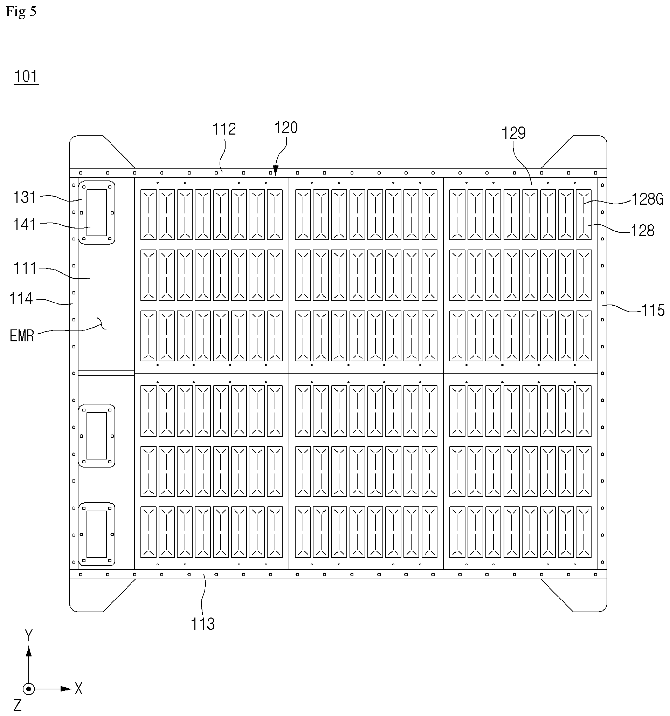

FIG. 5 is a perspective view of a battery pack 101 according to other example embodiments.

Referring to FIG. 5, the battery pack 101 may include a housing 110, a plurality of battery cell assemblies 120, a plurality of exhaust device brackets 131, a plurality of exhaust devices 141, and a lead plate 150.

The housing 110, the plurality of battery cell assemblies 120, and the lead plate 150 are substantially the same as those described above with reference to FIGS. 1 to 3, and thus a redundant description thereof is omitted here.

According to example embodiments, the plurality of exhaust devices 141 may be rupture disks. When a thermal runaway event occurs, one or more of the plurality of exhaust devices 141 may be broken due to high internal pressure of the battery pack 100 and thus a path for discharging a gas from the inside of the battery pack 101 may be provided.

The plurality of exhaust devices 141 may be fixed by the plurality of exhaust device brackets 131. The plurality of exhaust devices 141 may be coupled to the base plate 111 by the plurality of exhaust device brackets 131. According to example embodiments, a base hole 111H (see FIG. 3) of the base plate 111 may have a quadrangular shape, and the plurality of exhaust devices 141 may be have a quadrangular shape. An opening formed when the plurality of exhaust devices 141 are broken may also have a quadrangular shape but is not limited thereto.

Each of the plurality of exhaust devices 141 may have a roughly rectangular shape. A length of each of the plurality of exhaust devices 141 in the Y-axis direction may be different from a length of each of the plurality of exhaust devices 141 in the X-axis direction. The length of each of the plurality of exhaust devices 141 in the Y-axis direction may be greater than the length of each of the plurality of exhaust devices 141 in the X-axis direction.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a housing with a base plate and side walls coupled to the base plate;
a plurality of battery cell assemblies on an upper surface of the base plate; and
a plurality of exhaust devices coupled to the base plate.

2. The battery pack of claim 1, wherein each of the plurality of exhaust devices is of a valve type.

3. The battery pack of claim 1, wherein each of the plurality of exhaust devices is a rupture disk.

4. The battery pack of claim 1, wherein the base plate includes a plurality of base holes connected to the plurality of exhaust devices.

5. The battery pack of claim 4, wherein each of the plurality of exhaust devices includes an exhaust hole connected to a corresponding one of the plurality of base holes.

6. The battery pack of claim 5, wherein a width of each of the plurality of base holes is in a range of 30 mm to 100 mm.

7. The battery pack of claim 5, wherein a width of the exhaust hole of each of the plurality of exhaust devices is less than a width of each of the plurality of base holes.

8. The battery pack of claim 5, wherein a shape of the exhaust hole of each of the plurality of exhaust devices is different from a shape of each of the plurality of base holes.

9. The battery pack of claim 5, wherein each of the plurality of base holes has a quadrangular shape, and
a cross section of the exhaust hole of each of the plurality of exhaust devices has a circular shape.

10. The battery pack of claim 4, wherein each of the base holes is connected to two or more of the plurality of exhaust devices.

11. The battery pack of claim 1, wherein the plurality of exhaust devices are arranged asymmetrically.

12. The battery pack of claim 1, further comprising a plurality of exhaust device brackets configured to fix the plurality of exhaust devices to the base plate.

13. The battery pack of claim 12, wherein the exhaust device brackets are in contact with the upper surface of the base plate.

14. The battery pack of claim 1, wherein the base plate includes an electronic component mounting region on which a plurality of electronic components are disposed and a battery mounting region overlapping the plurality of battery cell assemblies, and
the plurality of exhaust devices are on the electronic component mounting region.

15. The battery pack of claim 1, wherein each of the plurality of exhaust devices is spaced apart from the plurality of battery cell assemblies.
